# EUROPEAN PATENT APPLICATION

(11) **EP 4 474 218 A1**
(43) Date of publication of application: **11.12.2024**
(21) Application number: 23178043.8
(22) Date of filing: 07.06.2023
(51) Int. Cl.: B60Q 1/34, B60Q 1/40

(54) **METHOD FOR PROVIDING OPERATING INSTRUCTIONS FOR AT LEAST ONE DIRECTION INDICATOR LIGHT OF A VEHICLE**

(71) Applicant: Volvo Car Corporation, 405 31 Göteborg (SE)
(72) Inventor: HEYRMAN, Sven, 40531 Göteborg (SE)
(74) Representative: Maiwald GmbH

(57) **Abstract**

The disclosure relates to a method (100) for providing operation instructions (OI) for at least one direction indicator light (11, 12, 13) of a vehicle (10), a method (200) for adapting operation of at least one direction indicator light (11, 12, 13) of a vehicle (10) to its driving behavior, a method (300) for predicting the driving behavior of a further vehicle (20) based on its operation of at least one direction indicator light (11, 12, 13), a computer program product, a vehicle (10) and a fleet of vehicles (10, 20).

## Description

The present disclosure relates to a method for providing operation instructions for at least one direction indicator light of a vehicle, a method for adapting operation of at least one direction indicator light of a vehicle to its driving behavior, a method for predicting the driving behavior of a further vehicle, a computer program product, a vehicle and a fleet of vehicles.

While direction indicator lights on vehicles are now present for a very long time and increase the safety of road users, the capabilities of communication to other road users by means of the direction indicator lights is still not used up to its full potential.

One reason for this is that drivers of vehicles behave different when using direction indicator lights during driving. Some drivers tend to start using them long before actually turning or switching lanes, others turn them on only when they are already turning or even switching lanes. Based on such different driving behaviors of drivers, any road user has a difficulty of understanding and relying on the behavior of other drivers.

The above problem is at least partially solved or alleviated by the subject matter of the independent claims of the present disclosure, wherein further examples are incorporated in the dependent claims.

According to a first aspect of this disclosure, there is provided a method for providing operating instructions for at least one direction indicator light of a vehicle, the operating instructions being adapted to the driving behavior of the vehicle, the method comprising:
- receiving measured driving behavior characteristics of the vehicle, the driving behavior characteristics comprising at least a driving speed and/or a driving angle of the vehicle,
- determining a driving behavior adapted light mode for the at least one direction indicator light based on the received driving behavior characteristics, and
- providing operating instructions for the at least one direction indicator light based on the determined driving behavior adapted light mode.

The method according to the first aspect of this disclosure provides for a safe and reliable operation of direction indicator lights in vehicles by adapting the operation of the direction indicator lights to the measured driving behavior. While normally the driver is in control of the operation of the direction indicator lights, in particular duration and/or number of blinkings, according to the method, a driving behavior adapted light mode is determined for control of the operation of the direction indicator lights. This eliminates the issue that different drivers tend to use the direction indicator lights in different ways, in particular too early or too late for different driving operations such as lane switching or turning. Accordingly, errors or poor judgement in operating the direction indicator lights, for example, not blinking when switching lanes or turning, or forgetting to turn off the blinking of the direction indicator lights, can be compensated for by the method. This effectively increases the safety of the vehicle passengers and other road users.

However, while the method may be exclusively used for controlling the operation of the direction indicator lights, it may also be provided that the method may provide supplementary operating instructions to the control of the direction indicator lights available to the driver. It may also be provided that the operating instructions, while they are provided, need to be activated in every instance by the driver. Further, the method may be embedded in the corresponding vehicle such that it may be toggled on and off. When the method is toggled on, the method may reliably be used for operation of the direction indicator lights. Further, the method may be embedded in the vehicle such that the provided operating instructions may be overwritten by operating instructions for the direction indicator light from the driver or others, or vice versa. For example, when the operating instructions are provided according to the method and the driver decides to not switch lanes despite the driving behavior indicating that he is about to do so, he may simply turn off the direction indicator light which was operated based on the provided operating instructions of the method. In another example, when the driver is turning left but accidently sets the direction indicator lights that he is about to turn right, the method may determine the incorrect operation of the direction indicator lights of the vehicle and correct the operation accordingly by operating the direction indicator lights such that they indicate a left turn and do not indicate a right turn anymore.

The method of the first aspect may in particular be a computer implemented method. This means that at least one, multiple or all of the steps of the method may be carried out by one or more computers or computing units. Different steps may be carried out by the same or by different computers. A computer is herein understood as a data processing system or apparatus, which can carry out the steps as defined by the method. The one or more computers may be configured as or provided inside of one more control units of the vehicle. These control units may also be configured to carry out other control operations than described by the method according to the first aspect. In one example, the control unit of the vehicle, which is configured for operation of the at least one direction indicator light, may be configured for carrying out the method of the first aspect.

The measured driving behavior characteristics may be received by the one or more computers from a measurement, which may be carried out by a corresponding measuring unit of the vehicle. The driving behavior characteristics may comprise at least a current driving speed and/or a current driving angle, in particular turning angle, which may be indicated or given by the steering angle of the steering wheel, of the vehicle. The measuring unit may be correspondingly configured to measure the driving speed and/or driving angle of the vehicle. Any known measurement configuration and/or principle, such as wheel speed sensors and steering angle sensors may be used for the measuring unit for this purpose. Besides the driving speed and the driving angle, further driving parameters may be measured and included in the driving behavior characteristics, such as, for example, driving acceleration, vehicle tilt, etc.

Based on the received driving behavior characteristics, a driving behavior adapted light mode is being determined, which may be done by the one or more computers. This driving behavior adapted light mode may define the operation for the one or more direction indicator lights that is recommended based on the driving behavior characteristics. Different driving behavior adapted light modes may be predefined for different sets or parameters of the driving behavior characteristics such that the determination may be a choice of a driving behavior adapted light mode from multiple available modes. Accordingly, a computing time required for the determination step is very short and the method can be carried out almost instantly. Given that the method must react in real-time, this is particularly advantageous.

When the driving behavior adapted light mode is determined, the one or more computers may provide operating instructions for the one or more direction indicator lights. The operating instructions may be predefined by the driving behavior adapted light mode such that no further calculation is needed. The operating instructions may be provided for execution by the one or more direction indicator lights of the vehicle. This means that the corresponding control unit in the vehicle configured for operation of the direction indicator lights may receive the operating instructions and accordingly execute them, such that the blinking of the one or more direction indicator lights defined by the operating instructions is made visible at the vehicle.

According to this disclosure, it is sufficient when one direction indicator light is being operated. However, typically, a vehicle comprises multiple of such direction indicator lights, such as, for example, at the vehicle front, at the vehicle back, at the vehicle mirrors and possibly more. Accordingly, the method may provide operating instructions for multiple or all direction indicator lights of the vehicle, depending on the driving behavior characteristics. For example, if a left turn is taken by the vehicle, indicated by the driving speed and the driving angle, the method may provide operating instructions to operate all of the direction indicator lights of the vehicle that may indicate a left turn to other road users. The vehicle may be of any type such as a car, truck, motorcycle, etc.

The driving behavior adapted light mode comprising setting a blinking frequency of the at least one direction indicator light based on the driving behavior characteristics. This extends the capabilities of the direction indicator lights and the operability typically given to the driver in any given driving scenario such that the direction indicator lights may be used not only in a single standard blinking configuration but depending on the particular driving behavior characteristics, a particular blinking frequency may be set. For example, the blinking frequency, which is defined by the blinkings per unified time unit, such as seconds, may be set higher at high speeds and big angles of the vehicle, while it may be set lower at low speeds and small angles of the vehicle. Thereby, the operation of the direction indicator lights may not only be used to indicate a direction of a driving behavior of the vehicle, e.g., a lane switching operation or a turning operation, but also to further define the driving behavior. For example, different blinking frequencies may be used for different driving speeds and/or driving angles. At high speeds, for example, a high blinking frequency may be set on highways in order to raise higher alert to other road users due to the high speed and the potential danger associated with switching lanes compared to slower speed driving vehicles. In another example, at slower driving speeds, the blinking frequency may be set higher than at high speeds because it is more likely that the vehicle would turn at slow speeds than high speeds. Both examples may depend on the particular driving environment of the vehicle and such driving environment may be determined as will be explained later such that the best fitting blinking frequency may be set. In another example, different blinking frequencies may be used for a lane switching operation, meaning that the vehicle switches from one lane to another adjacent lane while travelling in a certain direction, and a turning operation, meaning that the vehicle leaves the currently travelled lane, road or travelling direction by turning into another lane, road or travelling direction. For example, the blinking frequency for a lane switching operation may be set higher than for a turning operation because the lane switch may be performed faster than a turn, where it is typically required to use the direction indicator lights for a certain distance before taking the turn. By using the higher frequency, the vehicle intending to switch lanes based on the measured driving behavior characteristics may raise higher alert to other vehicles or road users in the surrounding than with a lower frequency.

The blinking frequency may be set by choice between at least two or three predefined blinking frequencies. In particular, there may be a maximum of five, four, three or two predefined blinking frequencies. This first makes the computing fast so the method can almost instantly set a corresponding blinking frequency. And second, this may create a recognizable and distinguishable standard for the few different blinking frequencies such that they and their relative meaning, e.g., whether a turning or lane switching operation is taken or when the vehicle is likely to turn or switch lanes, can be recognized quickly by other road users. Such standard may be utilized by different vehicles.

The blinking frequency may be chosen by comparison of the driving speed with at least one predefined driving speed range and the driving angle with at least one predefined driving angle range. The predefinition of corresponding ranges is a particularly quick and reliable procedure for enablement of the method to almost instantaneously set fitting blinking frequencies in each driving situation.

The blinking frequency may be chosen between the predefined blinking frequencies based on the at least one predefined driving angle range, when the measured driving speed lies within a predefined driving speed range, in particular of at least 20 km/h. This has the effect that for a certain predefined driving speed range, in particular at a minimum speed of 20 km/h, only the driving angle is considered for choosing the predefined blinking frequencies. This makes the method particularly easy and fast to be executed for setting a fitting one of the predefined blinking frequencies. Below the minimum speed, the blinking frequency may always be the same predefined blinking frequency independent of the measured driving angle because at predefined low speeds typically the only driving behavior can be assumed to be turning, or at least the potential danger from driving operations of the vehicle is small such that an advantage of using different blinking frequencies can be assumed to be small and therefore be omitted.

At least two, in particular at least three, different predefined driving speed ranges and at least two different predefined driving angle ranges may be used for the comparison. It has been found that this enables the method to distinguish between sufficient different driving behaviors based on the driving behavior characteristics to make good use of the advantages of the different blinking frequencies. In particular, a maximum of five, four or three different predefined driving speed ranges and/or a maximum of five, four or three predefined driving angle ranges may be used for the comparison such that the method is still simple enough to be carried out quickly by one or more computers in order to make the vehicle almost instantaneously set the best fitting blinking frequency.

The method may comprise determining a driving environment of the vehicle based on the predefined driving speed range, the driving environment being in particular used to distinguish at least between a turning operation and a lane switching operation of the vehicle. This measure provides for more accurate decision making whether a turning or lane switching operation is taking place such that the operating instructions, in particular with the blinking frequency to be set, may be chosen that fit the determined driving environment the best.

The method may distinguish between at least two driving environments, one being a highway driving environment and the other one being a city driving environment. For these two driving environments, the assessment of whether a turning or lane switching operation is taking place, may be very different based on the driving behavior characteristics. Accordingly, for the different environments, different predefined speed ranges and/or driving angle ranges may be chosen to set the best fitting blinking frequency. This increases the accuracy of the method, in turn increasing the safety and reliability increase achieved by the method.

The operating instructions may comprise an instruction to switch on the at least one direction indicator light, if based on the determined driving behavior adapted light mode a turning and/or lane switching behavior is detected as driving behavior of the vehicle. The detection of one of these driving behaviors and the switch on instruction further improve the reliability of the method by making sure that the direction indicator lights are operated during these driving behaviors.

According to a second aspect, there is provided a method for adapting operation of at least one direction indicator light of a vehicle to its driving behavior, the method comprising the method according to the first aspect of this disclosure and:
- measuring the driving behavior characteristics of the vehicle, and
- operating the at least one direction indicator light according to the provided operating instructions.

In contrast to the method of the first aspect of this disclosure, which may be computer implemented, the method of the second aspect of this disclosure may be carried out partially or entirely by the vehicle. For example, a computer or control unit in the vehicle may carry out the method of the first aspect, while the other steps of the method are carried out by a corresponding measuring unit for measuring the driving behavior characteristics of the vehicle and the direction indicator lights, which are being operated according to the provided operating instructions.

According to a third aspect of this disclosure, there is provided a method for predicting the driving behavior of a further vehicle based on its operation of at least one direction indicator light, the method in particular being carried out at least partially by a vehicle proximate to the further vehicle, and the method comprising:
- receiving a detected blinking frequency of at least one direction indicator light of the further vehicle,
- matching the detected blinking frequency to a predefined blinking frequency in a set of predefined blinking frequencies, and
- predicting the driving behavior based on the matched predefined blinking frequency.

Accordingly, the method according to the third aspect of this disclosure provides for a prediction of a driving behavior based on the blinking frequency of a vehicle. In an example where there are only two predefined blinking frequencies in a set of predefined blinking frequencies, wherein a first blinking frequency indicates a lane switching operation and a second blinking frequency indicates a turning operation, the vehicle carrying out the method according to the third aspect of this disclosure, which detects the blinking frequency of the further vehicle in its surrounding, can reliably predict the driving behavior of the further vehicle. Such prediction may be used in assisting autonomous operation of the vehicle, in particular measurement data from sensors and/or cameras of the vehicle, and/or be communicated, in particular displayed or announced, to the driver of the vehicle so that he can be aware of the operation of the further vehicle in its surrounding or proximity.

The method according to the third aspect of this disclosure works well when the set of predefined blinking frequencies is standardized among different road users, in particular vehicles, so that the meaning in terms of driving behavior of the different predefined blinking frequencies is the same or at least similar for all road users.

The method according to the third aspect of this disclosure may be computer implemented. The method of the third aspect may be carried out at least partially or entirely by a vehicle proximate to or, in other wordings, in the surrounding of the further vehicle. In particular, the above steps of the method may be carried out by one or more computers or control units of the vehicle. The method may further comprise the step of detecting the blinking frequency of the at least one direction indicator light of the further vehicle, which may then be forwarded to the computer(s) or control unit(s) for receival. The detection of the blinking frequency of other vehicles may be done by at least one sensor and/or at least one camera of the vehicle taking sensor readings or capturing images and/or video of the further vehicle, in particular its direction indicator lights, and analyzing these for detection of the blinking frequency being used.

According to a fourth aspect of this disclosure, there is provided a computer program product comprising instructions which, when the program is executed by a computer, cause the computer to carry out the method according to the first aspect and/or the third aspect of this disclosure.

The computer program product may be a computer program as such, meaning a computer program consisting of or comprising a program code to be executed by the computer. Alternatively, the computer program product may be a product such as a data storage, on which the computer program is temporarily or permanently stored.

According to a fifth aspect of this disclosure, there is provided a vehicle comprising at least one direction indicator light, a measuring unit for measuring driving behavior characteristics of the vehicle, and a control unit for controlling the at least one direction indicator light, the vehicle being configured to carry out the method according to the second aspect of this disclosure.

The vehicle being configured to carry out the method according to the second aspect of this disclosure in particular means that the respective components of the vehicle are configured to carry out the respective steps of the method according to the second aspect of this disclosure. For example, the measuring of the driving behavior characteristics may be carried out by the measuring unit and the operating of the at least one direction indicator light may be carried out by the control unit and/or the at least one direction indicator light. The steps corresponding to the method according to the first aspect of this disclosure may be carried out by a computer, a control unit or the mentioned control unit of the vehicle.

The vehicle may further comprise at least one blinking frequency detector for detecting the blinking frequency of at least one direction indicator light of a further vehicle, the blinking frequency detector in particular comprising at least one sensor and/or at least one camera for detecting the blinking frequency of the at least one direction indicator light of the further vehicle.

This enables the vehicle to further carry out the method according to the third aspect of this disclosure including a step of detecting the blinking frequency of the at least one direction indicator light of the further vehicle.

According to a sixth aspect of this disclosure, there is provided a fleet of vehicles, each vehicle being configured to carry out the method according to the first or second aspect of this disclosure, all vehicles utilizing substantially the same predefined blinking frequencies.

The fleet of vehicles may be from different types, e.g., trucks and cars, different manufacturers, etc. Utilizing substantially the same or the same predefined blinking frequencies, a standard for different blinking frequencies for different driving behaviors, e.g., switching lane or turning operations, can be implemented among the fleet of vehicles such that the different blinking frequencies may be reliably associated with certain driving behaviors, in particular through the method according to the third aspect of this disclosure.

It is noted that the above aspects, examples and features may be combined with each other irrespective of the aspect involved.

The above and other aspects of the present disclosure will become apparent from and elucidated with reference to the examples described hereinafter.

Examples of the disclosure will be described in the following with reference to the following drawings illustrating representations of
- Fig. 1: a method for adapting operation of one or more direction indicator lights of a vehicle,
- Fig. 2: a step in the method of Fig. 1,
- Fig. 3: the step of Fig. 2 with exemplary values,
- Fig. 4: a method for predicting the driving behavior of a further vehicle based on its operation of one or more direction indicator lights,
- Fig. 5: a driving scenario, in which the method of Fig. 4 may be used, and
- Fig. 6: a vehicle.

The figures are merely schematic representations and serve only to illustrate examples of the disclosure. Identical or equivalent elements are in principle provided with the same reference signs.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order.

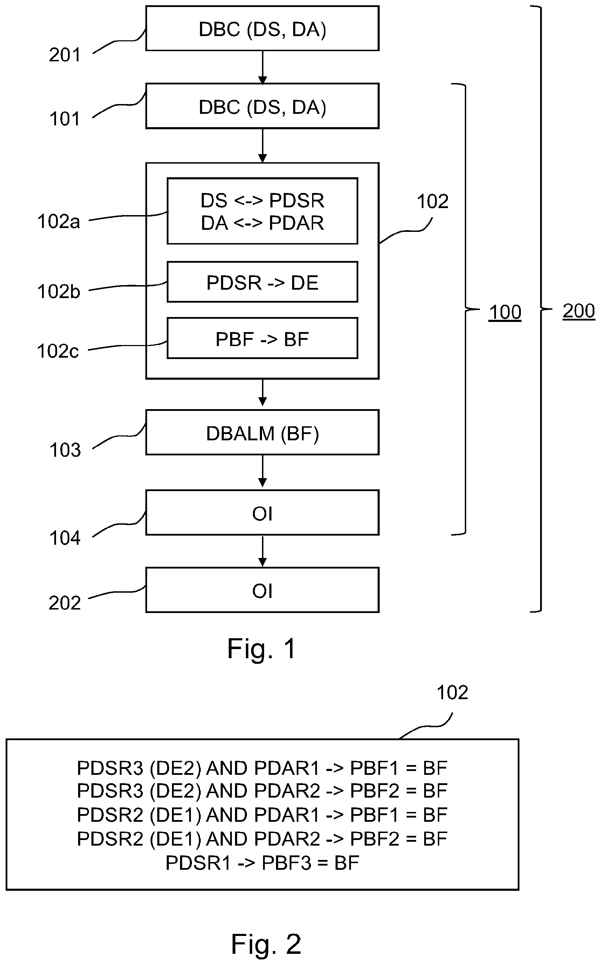

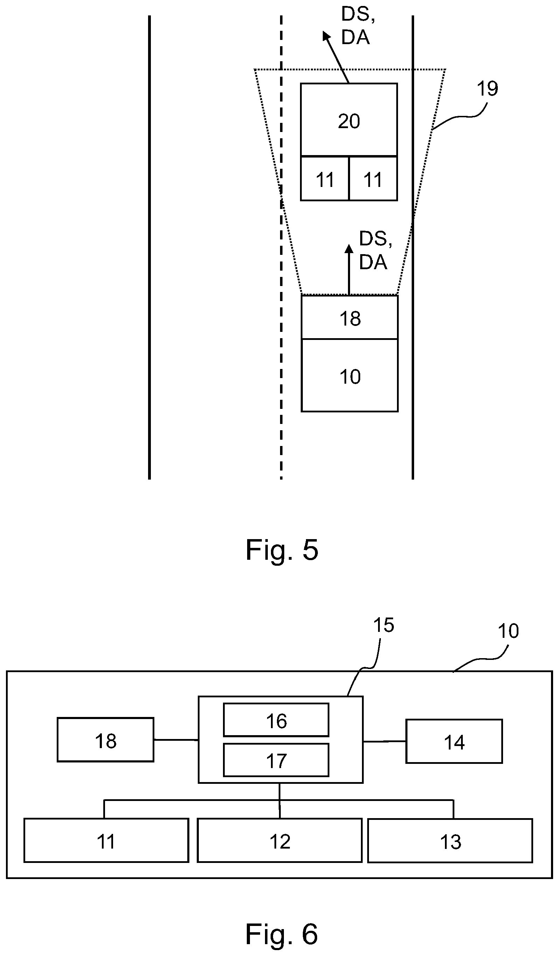

Figure 1 illustrates a method 200 for adapting operation of one or more direction indicator lights 11, 12, 13 of a vehicle 10 (see Figs. 5 and 6) to its driving behavior, the method 200 being herein referred to as a second method 200. In this example, the second method 200 is being carried out by the vehicle 10 and comprises the steps 201, 202 as well as a first method 100, which is computer implemented and may be carried out by a computer or control unit 15 of the vehicle 10 (see Fig. 6).

In a first step 201 of the second method 200, driving behavior characteristics DBC of the vehicle 10 are measured by a measurement unit 14 of the vehicle 10 (see Fig. 6), which may comprise a wheel speed sensor, a steering angle sensor, etc. The driving behavior characteristics DBC include the current driving speed DS and the current driving angle DA of the vehicle 10 travelling on a road. The driving angle DA may be given or indicated by a steering angle, in particular a wheel steering angle, of the vehicle 10.

In a first step 101 of the first method 100, the driving behavior characteristics DBC measured in the first step 201 of the second method 200 are being received by the computer or the control unit 15 of the vehicle 10. Of course, a separate step may be provided for sending the driving behavior characteristics DBC for receival by the computer or control unit 15.

In a third step 103 of the first method 100, a driving behavior adapted light mode DBALM for the direction indicator lights 11, 12, 13 based on the received driving behavior characteristics DBC is determined. The driving behavior adapted light mode DBALM is setting a blinking frequency BF of the direction indicator lights 11, 12, 13 based on the driving behavior characteristics DBC.

To determine the blinking frequency BF to be set by the driving behavior adapted light mode DBALM, a second step 102 of the second method 200 is being carried out. The separation into steps 102, 103 is for illustrative purposes and the steps 102, 103 may also be combined into a single step. In this example, the second step 102 comprises three sub-steps 102a, 102b, 102c, to set the blinking frequency BF, wherein any single or any arbitrary combination of these sub-steps 102a, 102b, 102c may be carried out.

In the first sub-step 102a of the first method 100, the measured driving speed DS and the measured driving angle DA are compared to respectively predefined ranges, namely at least one predefined driving speed range PDSR and at least one predefined driving angle range PDAR.

In the second sub-step 102b of the first method 100, based on the predefined driving speed range PDSR, a driving environment DE is determined. In this exemplary case, one of two driving environments DE may be determined, one being a highway driving environment DE2 and the other one being a city driving environment DE1 (see Fig. 2).

In the third sub-step 102c of the first method 100, based on the comparison in the first sub-step 102a and the determined driving environment DE in sub-step 102b, a blinking frequency BF is set by choice between two or more predefined blinking frequencies PBF, in this exemplary case a first predefined blinking frequency PBF1, a second predefined blinking frequency PBF2 and a third predefined blinking frequency PBF3 (see Fig. 2).

Now that the third step 103 of the first method 100 resulted in the determining of the driving behavior adapted light mode DBALM including the setting of the determined blinking frequency BF, in a fourth step 104 of the first method 100, operating instructions OI are being provided for the direction indicator lights 11, 12, 13 based on the determined driving behavior adapted light mode DBALM. The operating instructions OI may be configured as control instructions for the control unit 15 of the direction indicator lights 11, 12, 13.

In a second step 202 of the second method 200, the operating instructions OI are being used to operate the direction indicator lights 11, 12, 13 by means of their control unit 15.

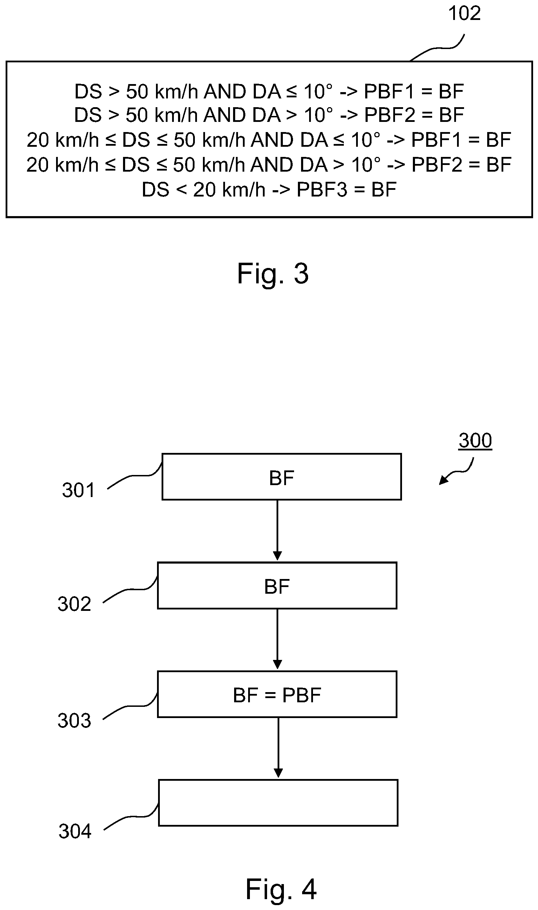

Figures 2 and 3 illustrate a summarized representation of the operations carried out in the second step 102 of the first method 100, wherein Fig. 2 illustrates the representation in a general manner and Fig. 3 illustrates it with exemplary values or numbers for the respective parameters given in Fig. 2.

In the example of Figs. 2 and 3, three different predefined driving speed ranges PDSR, namely PDSR1, PDSR2 and PDSR3, and two different predefined driving angle ranges PDAR, namely PDAR1 and PDAR2, are being used for the comparison in the first sub-step 102a. Also, three different predefined blinking frequencies PBF, namely PBF 1, PBF2 and PBF3, are considered in this example to be chosen from as blinking frequency BF for the driving behavior adapted light mode DBALM.

As is most comprehensive from the illustration of Fig. 3 and will be explained further, for the determination of a blinking frequency BF to be set by the driving behavior adapted light mode DBALM, the measured driving speed DS and the measured driving angle DA are being compared to the three different predefined driving speed ranges PDSR. Among the three different predefined driving speed ranges PDSR, two, namely PDSR2 and PDSR3, are being used to distinguish between the two different environments DE1 and DE2.

In the example of Fig. 3, when the measured driving speed DS is less than 20 km/h, which corresponds the first predefined driving speed range PDSR1, the blinking frequency BF is set to the third predefined blinking frequency PBF3.

Further, in the example of Fig. 3, when the measured driving speed DS is between 20 km/h and 50 km/h, which corresponds to the second predefined driving speed range PDSR2 and the first driving environment DE1, in this case a city driving environment, the blinking frequency BF is determined as the first predefined blinking frequency PBF1 or the second predefined blinking frequency PBF2 based on a comparison of the measured driving angle DA with the two predefined driving angle ranges PDAR1, PDAR2. In this exemplary case, PDAR1 is a driving angle DA of less than or equal to 10° and PDAR2 is a driving angle DA of more than 10°. Depending on the driving angle DA, the blinking frequency BF is now being chosen as the first predefined blinking frequency PBF1 or the second predefined blinking frequency PBF2. The different predefined blinking frequencies PBF1, PBF2 may reflect the different in driving angle DA based on the given predefined driving angle ranges PDAR1, PDAR2. For example, at a bigger driving angle DA, the blinking frequency BF may be higher than at smaller driving angles DA or vice versa.

Further, in the example of Fig. 3, when the measured driving speed DS is above 50 km/h, which corresponds to the third predefined driving speed range PDSR3 and the second driving environment DE2, in this case a highway driving environment, the blinking frequency BF is determined as the first predefined blinking frequency PBF1 or the second predefined blinking frequency PBF2 based on a comparison of the measured driving angle DA with the two predefined driving angle ranges PDAR1, PDAR2. Depending on the driving angle DA, the blinking frequency BF is now being chosen as the first predefined blinking frequency PBF1 or the second predefined blinking frequency PBF2. The different predefined blinking frequencies PBF1, PBF2 may reflect the different in driving angle DA based on the given predefined driving angle ranges PDAR1, PDAR2. For example, at a bigger driving angle DA, the blinking frequency BF may be higher than at smaller driving angles DA or vice versa.

In this example, the third predefined blinking frequency PBF3 may be 2 blinkings per second, which may essentially correspond to normal blinking. The second predefined blinking frequency PBF2 may be 1 blinking per second, for example. And the first predefined blinking frequency PBF1 may be 1 blinking per 2 seconds, for example.

It is noted that the examples of Figs. 2 and 3 may be adapted to include more or fewer predefined blinking frequencies PBF, predefined driving angle ranges PDAR and predefined driving speed ranges PDSR as required or may be advantageous.

Figure 4 illustrates a method 300 for predicting the driving behavior of a further vehicle 20 (see Fig. 5) based on its operation of at least one direction indicator light 11, 12, 13. This method 300 is herein referred to as a third method 300. In this example, the third method 300 is being carried out by the vehicle 10 and comprises the steps 301, 302, 303, 304, wherein the steps 302, 303, 304 may be computer implemented and may be carried out by the control unit 15, for example.

Figure 5 schematically illustrates a driving scenario in which the method 300 may be carried out by the vehicle 10. In this example, the further vehicle 20 is driving in front of the vehicle 10. The further vehicle 20 comprises two rear direction indicator lights 11. The driving speed DS and the driving angle DA of the further vehicle 20 are indicated by an arrow in front of the further vehicle 20. According to this arrow, the further vehicle 20 is about to switch from the right line of the road in Fig. 5 to the left. However, there may be an intersection ahead of the road (not shown) and depending on the driving speed DS and the driving angle DA, the further vehicle 20 ahead of vehicle 10 may alternatively decide to make a left turn on that intersection.

To signal the driving behavior of the further vehicle 20 to the vehicle 10, namely an intended operation of switching lanes or a left turn, in this example, the further vehicle 20 may carry out the second method 200 according to Fig. 2, thereby operating its left direction indicator light 11 with a blinking frequency BF corresponding to a predefined blinking frequency PBF recognizable by the vehicle 10 as a switching lane operation or a turning operation. Through this recognition and thereby the prediction of the driving behavior of the further vehicle 20, the driving safety of the vehicle 10 can be increased, e.g., by correspondingly taking drive actions in an at least partially autonomously driving vehicle 10, such as lowering its driving speed DS, or alerting the driver of the vehicle 10 about the driving behavior of the further vehicle 20.

To describe the third method 300 in more detail, in a first step 301 of the third method 300, a blinking frequency BF of at least one of the direction indicator lights 11, 12, 13 of the further vehicle 20 is detected by the vehicle 10. The first step 301 may be carried out by a blinking frequency detector 18 (see Fig. 6) comprising at least one sensor and/or at least one camera. In Fig. 5, the at least one sensor and/or at least one camera has a detection area 19, in which it may detect a blinking frequency BF of direction indicator lights 11, 12, 13 of other vehicles such as further vehicle 20.

In a second step 302 of the third method 300, a computer or the control unit 15 of the vehicle 10 may receive the detected blinking frequency BF of the operating left direction indicator light 11 of the further vehicle 20. In a third step 303 of the third method 300, the computer or control unit 15 may match the detected blinking frequency BF to a predefined blinking frequency PBF in a set of predefined blinking frequencies PBF, which may be similar or identical to the ones described above. And in a fourth step 304, the computer or control unit 15 may predict or recognize the driving behavior of the based on the matched predefined blinking frequency PBF.

Figure 6 illustrates a possible configuration of the vehicle 10 in a schematic representation. The vehicle 10 comprises three different types of direction indicator lights 11, 12, 13. For example, the first direction indicator light 11 or multiple first direction indicator lights 11 may be rear lights or located at the rear of the vehicle 10. The second direction indicator light 12 or multiple second direction indicator lights 12 may be front lights or located at the front of the vehicle 10. The third direction indicator light 13 or multiple third direction indicator lights 13 may be located at the exterior mirrors of the vehicle 10.

The vehicle 10 further comprises a measuring unit 14, which may comprise sensors or other units, such as a wheel drive sensor, a steering angle sensor, etc., for measuring the current driving angle DA and the driving speed DS of the vehicle 10. A control unit 15 is provided in the vehicle 10 for controlling operation of the direction indicator lights 11, 12, 13. The control unit 15 comprises a computing unit or processor 16 and a data storage 17. Computer-implemented steps of the aforementioned methods 100, 200, 300 may be carried out by the computing unit 16 or any other computing unit 16 in the vehicle. A computer program for any of the computer-implemented steps of the aforementioned methods 100, 200, 300 may be stored on the data storage 17.

Other variations to the disclosed examples can be understood and effected by those skilled in the art in practicing the claimed disclosure, from the study of the drawings, the disclosure, and the appended claims. In the claims the word "comprising" or "having" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 11: first direction indicator light
- 12: second direction indicator light
- 13: third direction indicator light
- 14: measuring unit
- 15: control unit
- 16: computing unit
- 17: data storage
- 18: blinking frequency detector
- 19: detection area
- 20: further vehicle
- 100: first method
- 200: second method
- 300: third method
- 101, 201, 301: first step
- 102, 202, 302: second step
- 102a: first sub-step
- 102b: second sub-step
- 102c: third sub-step
- 103, 303: third step
- 104, 304: fourth step
- BF: blinking frequency
- PBF: predefined blinking frequency
- PBF1: first predefined blinking frequency
- PBF2: second predefined blinking frequency
- PBF3: third predefined blinking frequency
- DA: driving angle
- PDAR: predefined driving angle range
- PDAR1: first predefined driving angle range
- PDAR2: second predefined driving angle range
- DBC: driving behavior characteristic
- DBALM: driving behavior adapted light mode
- DE: driving environment
- DE1: city driving environment
- DE2: highway driving environment
- DS: driving speed
- PDSR: predefined driving speed range
- PDSR1: first predefined driving speed range
- PDSR2: second predefined driving speed range
- PDSR3: third predefined driving speed range
- OI: operating instruction

## Claims

1. A method (100) for providing operating instructions (OI) for at least one direction indicator light (11, 12, 13) of a vehicle (10), the operating instructions (OI) being adapted to the driving behavior of the vehicle (10), the method (100) comprising:
- receiving measured driving behavior characteristics (DBC) of the vehicle (10), the driving behavior characteristics (DBC) comprising at least a driving speed (DS) and/or a driving angle (DA) of the vehicle (10),
- determining a driving behavior adapted light mode (DBALM) for the at least one direction indicator light (11, 12, 13) based on the received driving behavior characteristics (DBC), and
- providing operating instructions (OI) for the at least one direction indicator light (11, 12, 13) based on the determined driving behavior adapted light mode (DBALM).

2. The method (100) according to claim 1, the driving behavior adapted light mode (DBALM) comprising setting a blinking frequency (BF) of the at least one direction indicator light (11, 12, 13) based on the driving behavior characteristics (DBC)

3. The method (100) according to claim 2, the blinking frequency (BF) being set by choice between at least two or three predefined blinking frequencies (PBF).

4. The method (100) according to claim 3, the blinking frequency (BF) being chosen by comparison of the driving speed (DS) with at least one predefined driving speed range (PDSR) and the driving angle (DA) with at least one predefined driving angle range (PDAR).

5. The method (100) according to claim 4, the blinking frequency (BF) being chosen between the predefined blinking frequencies (PBF) based on the at least one predefined driving angle range (PDAR), when the measured driving speed (DS) lies within a predefined driving speed range (PDSR), in particular of at least 20 km/h.

6. The method (100) according to claim 4 or 5, at least two different predefined driving speed ranges (PDSR) and at least two different predefined driving angle ranges (PDAR) being used for the comparison.

7. The method (100) according to any of claims 4 to 6, the method (100) comprising determining a driving environment (DE) of the vehicle (10) based on the predefined driving speed range (PDSR), the driving environment (DE) being in particular used to distinguish at least between a turning operation and a lane switching operation of the vehicle (10).

8. The method (100) according to claim 7, the method (100) distinguishing between at least two driving environments (DE), one being a highway driving environment (DE2) and the other one being a city driving environment (DE1be).

9. The method (100) according to any of the previous claims, the operating instructions (OI) comprising an instruction to switch on the at least one direction indicator light (11, 12, 13), if based on the determined driving behavior adapted light mode (DBALM) a turning and/or lane switching operation is detected as driving behavior of the vehicle (10).

10. A method (200) for adapting operation of at least one direction indicator light (11, 12, 13) of a vehicle (10) to its driving behavior, the method (200) comprising the method (100) according to any of the previous claims and:
- measuring the driving behavior characteristics (DBC) of the vehicle (10), and
- operating the at least one direction indicator light (11, 12, 13) according to the provided operating instructions (OI).

11. A method (300) for predicting the driving behavior of a further vehicle (20) based on its operation of at least one direction indicator light (11, 12, 13), the method (300) comprising:
- receiving a detected blinking frequency (BF) of at least one direction indicator light (11, 12, 13) of the further vehicle (20),
- matching the detected blinking frequency (BF) to a predefined blinking frequency (PBF) in a set of predefined blinking frequencies (PBF), and
- predicting the driving behavior of the further vehicle (20) based on the matched predefined blinking frequency (PBF).

12. A computer program product comprising instructions which, when the program is executed by a computer, cause the computer to carry out the method (100, 300) according to any of the claims 1 to 9 and 11.

13. A vehicle (10) comprising at least one direction indicator light (11, 12, 13), a measuring unit (14) for measuring driving behavior characteristics (DBC) of the vehicle (10), and a control unit (15) for controlling the at least one direction indicator light (11, 12, 13), the vehicle (10) being configured to carry out the method (200) according to claim 10.

14. The vehicle (10) according to claim 13, the vehicle (10) further comprising at least one blinking frequency detector (18) for detecting the blinking frequency (BF) of at least one direction indicator light (11, 12, 13) of a further vehicle (20), the blinking frequency detector (18) in particular comprising at least one sensor and/or at least one camera for detecting the blinking frequency (BF) of the at least one direction indicator light (11, 12, 13) of the further vehicle (20).

15. A fleet of vehicles (10, 20) according to claim 13 or 14, each vehicle (10, 20) being configured to carry out the method (100) according to any of claims 3 to 8, all vehicles (10, 20) utilizing substantially the same predefined blinking frequencies (PBF).

## Amended claims

### Amended claims in accordance with Rule 137(2) EPC.

1. A method (100) for providing operating instructions (OI) for at least one direction indicator light (11, 12, 13) of a vehicle (10), the operating instructions (OI) being adapted to the driving behavior of the vehicle (10), the method (100) comprising:
- receiving measured driving behavior characteristics (DBC) of the vehicle (10), the driving behavior characteristics (DBC) comprising at least a driving speed (DS) and a driving angle (DA) of the vehicle (10),
- determining a driving behavior adapted light mode (DBALM) for the at least one direction indicator light (11, 12, 13) based on the received driving behavior characteristics (DBC), the driving behavior adapted light mode (DBALM) comprising setting a blinking frequency (BF) of the at least one direction indicator light (11, 12, 13) based on the driving behavior characteristics (DBC), the blinking frequency (BF) being set by choice between at least two predefined blinking frequencies (PBF), the blinking frequency (BF) being chosen by comparison of the driving speed (DS) with at least two predefined driving speed ranges (PDSR) and the driving angle (DA) with at least two predefined driving angle ranges (PDAR), the blinking frequency (BF) being chosen between the predefined blinking frequencies (PBF) based on the at least two predefined driving angle ranges (PDAR), when the measured driving speed (DS) lies within a predefined driving speed range (PDSR), and
- providing operating instructions (OI) for the at least one direction indicator light (11, 12, 13) based on the determined driving behavior adapted light mode (DBALM).

2. The method (100) according to claim 1, the blinking frequency (BF) being chosen between the predefined blinking frequencies (PBF) based on the at least two predefined driving angle ranges (PDAR), when the measured driving speed (DS) lies within a predefined driving speed range (PDSR) of at least 20 km/h.

3. The method (100) according to claim 1 or 2, the method (100) comprising determining a driving environment (DE) of the vehicle (10) based on the predefined driving speed range (PDSR), the driving environment (DE) being in particular used to distinguish at least between SE:AFE
a turning operation and a lane switching operation of the vehicle (10), the operating instructions (OI) comprising an instruction to switch on the at least one direction indicator light (11, 12, 13), if based on the determined driving behavior adapted light mode (DBALM) a turning and/or lane switching operation is detected as driving behavior of the vehicle (10).

4. The method (100) according to claim 3, the method (100) distinguishing between at least two driving environments (DE), one being a highway driving environment (DE2) and the other one being a city driving environment (DE1).

5. A method (200) for adapting operation of at least one direction indicator light (11, 12, 13) of a vehicle (10) to its driving behavior, the method (200) comprising the method (100) according to any of the previous claims and:
- measuring the driving behavior characteristics (DBC) of the vehicle (10), and
- operating the at least one direction indicator light (11, 12, 13) according to the provided operating instructions (OI).

6. A method (300) for predicting the driving behavior of a further vehicle (20) based on its operation of at least one direction indicator light (11, 12, 13), the method (300) comprising:
- receiving a detected blinking frequency (BF) of at least one direction indicator light (11, 12, 13) of the further vehicle (20),
- matching the detected blinking frequency (BF) to a predefined blinking frequency (PBF) in a set of two predefined blinking frequencies (PBF), wherein a first predefined blinking frequency (PBF1) indicates a lane switching operation and a second predefined blinking frequency (PBF2) indicates a turning operation, and
- predicting the driving behavior of the further vehicle (20) based on the matched predefined blinking frequency (PBF).

7. A computer program product comprising instructions which, when the program is executed by a computer, cause the computer to carry out the method (100, 300) according to any of the claims 1 to 4 and 6.

8. A vehicle (10) comprising at least one direction indicator light (11, 12, 13), a measuring unit (14) for measuring driving behavior characteristics (DBC) of the vehicle (10), and a control unit (15) for controlling the at least one direction indicator light (11, 12, 13), the vehicle (10) being configured to carry out the method (200) according to claim 5.

9. The vehicle (10) according to claim 8, the vehicle (10) further comprising at least one blinking frequency detector (18) for detecting the blinking frequency (BF) of at least one direction indicator light (11, 12, 13) of a further vehicle (20), the blinking frequency detector (18) in particular comprising at least one sensor and/or at least one camera for detecting the blinking frequency (BF) of the at least one direction indicator light (11, 12, 13) of the further vehicle (20).

10. A fleet of vehicles (10, 20) according to claim 8 or 9, each vehicle (10, 20) being configured to carry out the method (100) according to any of claims 1 to 4, all vehicles (10, 20) utilizing substantially the same predefined blinking frequencies (PBF).
